# EUROPEAN PATENT SPECIFICATION

(11) **EP 2 871 546 B1**
(45) Date of publication and mention of the grant of the patent: **03.01.2018**
(21) Application number: 14188238.1
(22) Date of filing: 09.10.2014
(51) Int. Cl.: G05B 19/05, G06F 11/14, G06F 12/16

(54) **Backup system for PLC systems**
Backupsystem für SPS-Steuerungen
Système de secours pour des systèmes PLC

(30) Priority: 17.10.2013 DE 202013104690 U
(43) Date of publication of application: 13.05.2015
(73) Proprietor: MB connect line GmbH Fernwartungssysteme, 91550 Dinkelsbühl (DE)
(72) Inventor: Müller, Siegfried, 91550 Dinkelsbühl (DE)
(74) Representative: Wittmann, Günther

(56) References cited:
- EP-A1- 1 284 446
- JP-A- H11 143 784
- US-A1- 2004 193 862
- US-A1- 2004 193 948

## Description

The invention relates to a backup device, which may conduct a backup of a control device, for instance a programmable controller. The backup comprises backup of the data and/or of the program of the control device. Further, a memory image of the control device may be backed up. Such backups are commonly denoted as "backup" by the skilled person.

The backup device may further determine, whether the program stored in the control device was manipulated, for instance in having been altered by computer viruses.

The control device may be programmable controller (PLC; SPS). Such a programmable controller may control a facility, for instance a production line or a chemical reactor. Such a programmable controller usually does not comprise backup means, in order to backup program data and other stored data. Thus, an external device is required, in order to create a data backup, for instance by copying the data of the programmable controller.

Further, it is not possible to install in the programmable controller programs, which may identify any manipulations and/or which may identify virus contamination, since, usually, no standard operating systems are used in programmable controllers.

US 2004/0193862 A1 discloses a device with a high storage capacity and several basic input/output system (BIOS) backup copies. It can at least backup one set of computer BIOS and, when the computer BIOS is damaged, sends the backup copy to the computer system to maintain its normal operations.

EP 1 284 446 A1 discloses a client application that periodically downloads backup data to a third party data warehouse at another location different from the client application and the automation interface. The data backup can then be stored and analyzed.

US 2004/0193948 A1 proposes backup of a user program memory storing a user program.

JP H11 143784 A1 proposes to compare a memory content with PLC backup data.

It is an object of the invention to provide a backup device, which allows backup of values altered and optimized by operators.

The object of the invention is solved by a backup device according to claim 1. The dependent claims claim preferred embodiments.

A backup device according to the invention, which is adapted to conduct a backup of a control device comprises an interface, which may be coupled with the control device, and a transmission unit, adapted to read data from the control device and/or write data to the control device via the interface. The control device may be a control device for controlling a production line or a chemical reactor. In particular, the control device may be programmable controller or similar. Further, the control device comprises a memory unit, adapted to store the data read from the control device. It is understood that the memory unit can store the data in a non-volatile way, for instance by means of a hard drive, a tape, or an EPROM.

The backup device further comprises a backup control unit adapted to instruct the transmission unit to read at least a part of a program memory of the control unit as first program backup data, and to instruct the memory unit to store the first program backup data in a non-volatile way. The program memory of the control device can be a program, which controls the facility, for instance the production line or the chemical reactor. The program memory can store the instructions of the processor of the control device. The control unit is adapted to instruct the transmission unit to read at least a part of a program memory of the control device as further program backup data. The program backup data may be a data backup, i.e. a so called backup.

The first program backup data may for instance be backed up after successful initial operation or approval. The further program backup data may be obtained by means of a so called cyclic data backup.

The backup device further comprises a comparison unit adapted to compare the first program backup data and the further program backup data. If the first program backup data and the further program backup data are compared, it is possible to identify manipulations in the program memory or the control device, for instance by computer viruses. The backup device further comprises a warning unit, adapted to release a warning, if the first program backup data and the further program backup data differ.

Thereby, the operator of the control device may recognize that the program memory of the control device was manipulated.

The backup control unit may be adapted to instruct the transmission unit to write the first program backup data to the program memory of the control device, if the comparison unit determines that the first program backup data and the further program backup data differ. Thereby it can be ensured that in the program memory of the control device a non-manipulated program is present.

The backup device may comprise an input unit, by use of which the user may confirm that the first program backup data are to be written to the program memory of the control unit, wherein the backup control unit is adapted to instruct the transmission unit to write the first program backup data to the program memory of the control device, if the user confirms by means of the input unit that the first program backup data is to be written to the program memory of the control unit. By this arrangement, an interaction of the user is interposed before the program memory of the control unit is overwritten with the original program, again. Thereby, it is possible to ensure that intended alterations in the program memory of the control unit are not overwritten by the original contents of the program memory.

The warning unit may release the warning as an e-mail, SMS, by means of a signal at a digital outlet and/or by means of a relay.

The comparison unit can identify a manipulation to the program code of the control unit and/or the contamination by computer viruses in the program code of the control unit.

The control backup unit is adapted to instruct the transmission unit to read at least a part of dynamic memory of the control device as dynamic backup data, and to instruct the memory unit to store the dynamic backup data in a non-volatile way. In the dynamic memory of the programmable controller, data such as formulations, nominal values etc. are deposited. Such values are constantly altered and optimized by machine operators. For the most part, these alterations are not sufficiently documented.

The interface may comprise an Ethernet interface, and MPI interface and/or a Profibus interface. The functionality of these interfaces is known to the skilled person and do not have to be further explained herein.

The backup device may comprise a timer adapted to instruct the backup control unit after lapse of a predetermined time interval to read at least a part of the program memory of the control device as further program backup data from the control device, to instruct the comparison unit, to compare the first program backup data with the further program backup data, and to instruct the warning unit to release a warning, if the first program backup data and the further program backup data differ.

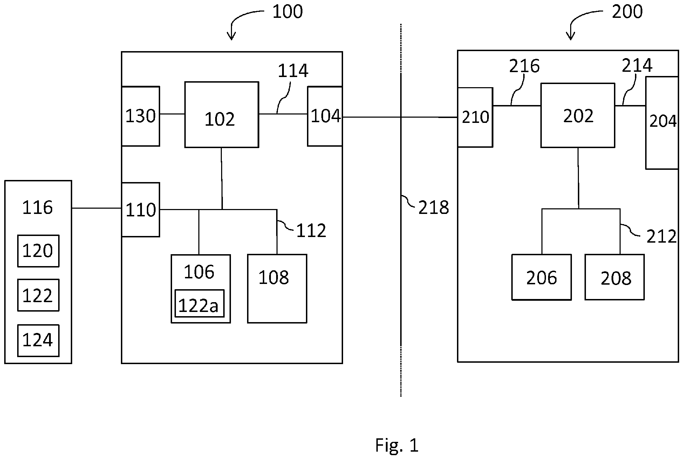

The invention is now described with reference to Figure 1, which shows an exemplary and non-limiting embodiment of the invention.

Figure 1 shows a programmable controller 200 and a backup device 100, which are connected via a data connection 218. The data connection 218 can be a bus, for instance a Profibus, an MPI-bus or an Ethernet. The programmable controller comprises a processor 202, a working memory 206 and a first bus 212, which connects the working memory 206 and the program memory 208 with the processor 202. The working memory 206 may be a volatile memory, such as for instance a RAM. The program memory 208 may be a non-volatile memory, for instance a hard drive or an EPROM. The program memory may store the instructions, which are to be executed by the processor 202, in order to control a facility, for instance a production line or a chemical reactor.

To the processor 202 of the control unit 200 a first interface 204 is connected via a second bus, through which a unit, which is to be controlled, may be connected. The interface 204 may comprise binary outlets, digital outlets, relays, and/or a bus. Via a third bus 216, a second interface 210 is connected to the processor 202. The second interface 210 may be used for controlling an external unit. Likewise, the second interface 210 may be used for a connection to a higher ranking computer, for instance a line computer or a cell computer. The functionality of programmable controllers is known to the skilled person and, in terms of conciseness, does not have to be further explained at this stage.

The backup device according to the invention comprises a processor 102, which is connected by means of a first bus 112 to a working memory 106 and a non-volatile memory 108 as well as a first interface 110. The volatile memory 106 may comprise the working memory and for instance be formed by a RAM. The non-volatile memory 108 may comprise the program memory. A backup medium 116 may be connected to the first interface 110. The backup medium may comprise a tape drive, a mobile hard drive, and/or an EPROM. The first interface 110 may be for instance a USB interface.

The backup device further comprises a second interface 104, which is connected to the processor by means of a second bus 114. The second interface may be a Profibus, an MPI bus or an Ethernet. The processor 102 may be a transmission unit, a comparison unit, and/or a timer.

In the following, the functionality of the invention is briefly explained. Subsequent to the initial operation, the processor 102 of the backup device 100 requests, via the interface 104, the data connection 218 as well as the interface 210, that the processor 202 of the programmable controller 200 transfers the content of the program memory 208. The processor 102 of the backup device 100 may store the content of the program memory 208 either in the non-volatile memory 108 or in the external memory unit 116 as first program backup data 120.

After lapse of a predetermined time interval, which is recognized by the processor 102 of the backup device 100, as it also functions as timer, the processor 102 of the backup device 100 requests again that the processor 202 of the control device 200 transfers the content of the program memory 208. This data is treated by the processor 102 of the backup device 100 as further program backup data and may be stored as further program backup data 122, 122a in the external memory unit 116 or in the non-volatile memory 108.

It is not required that the further program backup data 122 are stored to the external memory unit 116. The further program backup data may be stored in the volatile memory 106 of the backup device. This arrangement is preferred such that possibly manipulated program backup data may not distribute.

The processor 102 of the backup device 100 may function as comparison unit and compare the first program backup data 120 and the further program backup data 122, 122a. If the first program backup data 120 and the further program backup data 122, 122a differ, the program memory 208 of the control device was manipulated, for instance by computer viruses. In this case, the processor 102 of the backup device 100 releases an alarm on a third interface 130, for instance by means of e-mail, SMS, or a binary signal or such. The third interface may be a modem.

The processor 102 of the backup device 100 may instruct the processor 202 of the control device 200 to transfer the content of the dynamic memory 206. The processor 102 of the backup device 100 stores this data as dynamic backup data 124 in the external memory unit 116 or in the non-volatile memory 108 of the backup device.

The present invention has the advantage that, on the one hand, backups of a programmable controller may be conducted and, on the other hand, manipulations in the program code, for instance by computer viruses, may be identified.

## Claims

1. Backup device (100), adapted to conduct a backup of a programmable controller (200), with
- an interface (104), which is coupled with the programmable controller (200);
- a transmission unit (102), adapted to read data from the programmable controller (200) via the interface (104) and/or write data to the programmable controller (200) via the interface (104);
- a memory unit (108, 116), adapted to store the data read from the programmable controller (104);
- a backup control unit (102) adapted to instruct the transmission unit (102), to read at least part of a program memory (208) of the programmable controller (200) as first program backup data (120), and to instruct the memory unit (108, 116) to store the first program backup data (120) in a non-volatile way in the memory unit (108, 116), wherein the backup control unit (102) is further adapted to instruct the transmission unit (102) to read at least part of a program memory (208) of the programmable controller (200) as further program backup data (122, 122a);
- a comparison unit (102) adapted to compare the first program backup data (120) and the further program backup data (122, 122a); and
- a warning unit (102) adapted to release a warning, if the comparison unit (102) determines that the first program backup data (120) and the further program backup data (122, 122a) differ;
**characterized in that** the backup control unit (102) is adapted to instruct the transmission unit (102) to read at least a part of a dynamic memory (206) of the programmable controller as dynamic backup data (124), and to instruct the memory unit (108, 116) to store the dynamic backup data (124) in a non-volatile way in the memory unit (108, 116), wherein the dynamic backup data includes a formulation and/or a nominal value altered and/or optimized by a machine operator.

2. Backup device (100) according to claim 1, **characterized in that** the backup control unit (102) is adapted to instruct the transmission unit (102) to write the first program backup data (120) to the program memory (208) of the programmable controller (200), if the comparison unit determines that the first program backup data and the further program backup data differ.

3. Backup device (100) according to claim 2, **characterized by** an input unit, by means of which a user may confirm that the first program backup data (120) are to be written to the program memory (208) of the programmable controller (200), wherein the backup control unit (102) is adapted to instruct the transmission unit, to write the first program backup data to the program memory of the programmable controller, if the program backup data and the further program backup data differ and if the user confirms by means of the input unit that the first program backup data are to be written to the program memory (208) of the programmable controller (200).

4. Backup device (100) according to one of claims 1 to 3, **characterized in that** the warning unit (102) is adapted to release the warning via e-mail, via SMS, a digital outlet and/or via a relay.

5. Backup device (100) according to one of claims 1 to 4, **characterized in that** the comparison unit (102) is adapted to determine manipulation to the program code of the programmable controller (200) and/or contamination by computer viruses in the program code of the programmable controller (200).

6. Backup device (100) according to one of claims 1 to 5, **characterized in that** the interface (104) comprises an Ethernet interface, MPI interface, and/or a Profibus interface.

7. Backup device (100) according to one of claims 1 to 6, **characterized by** a timer (102) adapted to instruct the backup control unit (102) to read, after lapse of a predetermined time interval, at least a part of the program memory (208) of the programmable controller (100) as further program backup data (122, 122a) from the programmable controller, to instruct the comparison unit (102) to compare the first program backup data (120) with the further program backup data (122, 122a), and to instruct the warning unit to release a warning, if the first program backup data and the further program backup data differ.

## Patentansprüche

1. Sicherungsvorrichtung (100), die dazu ausgebildet ist, eine Sicherung einer programmierbaren Steuerung (200) durchzuführen, mit
- einer Schnittstelle (104), die mit der programmierbaren Steuerung (200) gekoppelt ist;
- einer Übertragungseinrichtung (102), die dazu ausgebildet ist, über die Schnittstelle (104) Daten aus der programmierbaren Steuerung (200) auszulesen und/oder Daten über die Schnittstelle (104) in die programmierbare Steuerung (200) zu schreiben;
- eine Speichereinrichtung (108, 116), die dazu ausgebildet ist, die aus der programmierbaren Steuerung (104) ausgelesenen Daten zu speichern;
- eine Sicherungssteuerungseinrichtung (102), die dazu ausgebildet ist, die Übertragungsrichtung (102) anzuweisen, zumindest einen Teil eines Programmspeichers (208) der programmierbaren Steuerung (200) als erste Programmsicherungsdaten (120) auszulesen, und die Speichereinrichtung (108, 116) anzuweisen, die ersten Programmsicherungsdaten (120) nicht flüchtig in der Speichereinrichtung (108, 116) zu speichern, wobei die Sicherungssteuerungseinrichtung (102) auch dazu ausgebildet ist, die Übertragungseinrichtung (102) anzuweisen, zumindest einen Teil eines Programmspeichers (208) der programmierbaren Steuerung (200) als weitere Programmsicherungsdaten (122, 122a) auszulesen;
- eine Vergleichseinrichtung (102), die dazu ausgebildet ist, die ersten Programmsicherungsdaten (120) und die weiteren Programmsicherungsdaten (122, 122a) zu vergleichen; und
- eine Warneinrichtung (102), die dazu ausgebildet ist, eine Warnung auszugeben, falls die Vergleichseinrichtung (102) ermittelt, dass sich die ersten Programmsicherungsdaten (120) und die weiteren Programmsicherungsdaten (122, 122a) unterscheiden;
**gekennzeichnet dadurch, dass** die Sicherungssteuerungseinrichtung (102) dazu ausgebildet ist, die Übertragungseinheit (102) anzuweisen, zumindest einen Teil eines dynamischen Speichers (206) der programmierbaren Steuerung als dynamische Sicherungsdaten (124) auszulesen, und die Speichereinrichtung (108, 116) anzuweisen, die dynamischen Sicherungsdaten (124) nicht flüchtig in der Speichereinrichtung (108,116) zu speichern, wobei die dynamischen Sicherungsdaten eine Formel und/oder einen Soll-Wert, die durch einen Maschinenbediener verändert und/oder optimiert werden.

2. Sicherungsvorrichtung (100) nach Anspruch 1, **dadurch gekennzeichnet, dass** die Sicherungssteuerungseinrichtung (102) dazu ausgebildet ist, die Übertragungseinrichtung (102) anzuweisen, die ersten Programmsicherungsdaten (120) in den Programmspeicher (208) der programmierbaren Steuerung (200) zu schreiben, falls die Vergleichseinrichtung feststellt, dass sich die ersten Programmsicherungsdaten und die weiteren Programmsicherungsdaten unterscheiden.

3. Sicherungsvorrichtung (100) nach Anspruch 2, **gekennzeichnet durch** eine Eingabeeinrichtung, mittels der ein Nutzer bestätigen kann, dass die ersten Programmsicherungsdaten (120) in den Programmspeicher (208) der programmierbaren Steuerung (200) zu schreiben sind, wobei die Sicherungssteuerungseinrichtung (102) dazu ausgebildet ist, die Übertragungseinheit anzuweisen, die ersten Programmsicherungsdaten in den Programmspeicher der programmierbaren Steuerung zu schreiben, falls sich die ersten Programmsicherungsdaten und die weiteren Programmsicherungsdaten unterscheiden und falls der Nutzer mittels der Eingabeeinrichtung bestätigt, dass die ersten Programmsicherungsdaten in den Programmspeicher (208) der programmierbaren Steuerung (200) zu schreiben sind.

4. Sicherungsvorrichtung (100) nach einem der Ansprüche 1 bis 3, **dadurch gekennzeichnet, dass** die Warneinrichtung (102) dazu ausgebildet ist, die Warnung per E-Mail, per SMS, per digitalem Ausgang und/oder per Relais auszugeben.

5. Sicherungsvorrichtung (100) nach einem der Ansprüche 1 bis 4, **dadurch gekennzeichnet, dass** die Vergleichseinrichtung (102) dazu ausgebildet ist, eine Manipulation am Progammcode der programmierbaren Steuerung (200) und/oder einen Befall durch Computerviren im Programmcode der programmierbaren Steuerung (200) zu erkennen.

6. Sicherungsvorrichtung (100) gemäß einem der Ansprüche 1 bis 5, **dadurch gekennzeichnet, dass** die Schnittstelle (104) eine Ethernet-Schnittstelle, eine MPI-Schnittstelle und/oder eine Profibus-Schnittstelle aufweist.

7. Sicherungsvorrichtung (100) nach einem der Ansprüche 1 bis 6, **gekennzeichnet durch** einen Timer (102), der dazu ausgebildet ist, die Sicherungsteuerungseinrichtung (102) anzuweisen, zumindest einen Teil des Programmspeichers (208) der programmierbaren Steuerung (100) nach Ablauf eines vorbestimmten Zeitinterwalles, als weitere Programmsicherungsdaten (122, 122a) der programmierbaren Steuerung (120) auszulesen, um die Vergleichseinrichtung (102) anzuweisen, die ersten Programmsicherungsdaten (120) mit den weiten Programmsicherungsdaten (122, 122a) zu vergleichen, und um die Warneinrichtung anzuweisen, eine Warnung auszugeben, falls sich die ersten Programmsicherungsdaten und die weiteren Programmsicherungsdaten unterscheiden.

## Revendications

1. Dispositif de sauvegarde (100), adapté pour mettre en oeuvre une sauvegarde d'un contrôleur programmable (200), avec :
- une interface (104), qui est couplée au contrôleur programmable (200) ;
- une unité de transmission (102), adaptée de manière à lire des données à partir du contrôleur programmable (200) via l'interface (104) et/ou de manière à écrire des données sur le contrôleur programmable (200) via l'interface (104) ;
- une unité de mémoire (108, 116), adaptée de manière à stocker les données lues à partir du contrôleur programmable (104) ;
- une unité de commande de sauvegarde (102) adaptée de manière à appliquer des instructions sur l'unité de transmission (102), de manière à lire au moins une partie d'une mémoire de programme (208) du contrôleur programmable (200) en tant que premières données de sauvegarde de programme (120) et de manière à demander en instruction à l'unité de mémoire (108, 116) de stocker les premières données de sauvegarde de programme (120) d'une façon non volatile dans l'unité de mémoire (108, 116), dans lequel l'unité de commande de sauvegarde (102) est en outre adaptée de manière à demander en instruction à l'unité de transmission (102) de lire au moins une partie d'une mémoire de programme (208) du contrôleur de programme (200) en tant qu'autres données de sauvegarde de programme (122, 122a) ;
- une unité de comparaison (102) adaptée de manière à comparer les premières données de sauvegarde de programme (120) et les autres données de sauvegarde de programme (122, 122a) ; et
- une unité d'alarme (102) adaptée de manière à délivrer une alarme, si l'unité de comparaison (102) détermine que les premières données de sauvegarde de programme (120) et les autres données de sauvegarde de programme (122, 122a) diffèrent,
**caractérisé en ce que** l'unité de commande de sauvegarde (102) est adaptée de manière à demander en instruction à l'unité de transmission (102) de lire au moins une partie d'une mémoire dynamique (206) du contrôleur programmable en tant que données de sauvegarde dynamique (124), et de manière à demander en instruction à l'unité de mémoire (108, 116) de stocker les données de sauvegarde dynamique (124) d'une façon non volatile dans l'unité de mémoire (108, 116), dans lequel les données de sauvegarde dynamique incluent une formulation et/ou une valeur nominale altérée et/ou optimisée par un opérateur de machine.

2. Dispositif de sauvegarde (100) selon la revendication 1, **caractérisé en ce que** l'unité de commande de sauvegarde (102) est adaptée de manière à demander en instruction à l'unité de transmission (102) d'écrire les premières données de sauvegarde de programme (120) dans la mémoire de programme (208) du contrôleur programmable (200), si l'unité de comparaison détermine que les premières données de sauvegarde de programme et les autres données de sauvegarde de programme diffèrent.

3. Dispositif de sauvegarde (100) selon la revendication 2, **caractérisé par** une unité d'entrée, au moyen de laquelle un utilisateur peut confirmer que les premières données de sauvegarde de programme (120) doivent être écrites dans la mémoire de programme (208) du contrôleur programmable (200), dans lequel l'unité de commande de sauvegarde (102) est adaptée de manière à demander en instruction à l'unité de transmission d'écrire les premières données de sauvegarde de programme dans la mémoire de programme du contrôleur programmable, si les premières données de sauvegarde de programme et les autres données de sauvegarde de programme diffèrent et si l'utilisateur confirme au moyen de l'unité d'entrée que les premières données de sauvegarde de programme doivent être écrites dans la mémoire de programme (208) du contrôleur programmable (200).

4. Dispositif de sauvegarde (100) selon l'une des revendications 1 à 3, **caractérisé en ce que** l'unité d'alarme (102) est adaptée de manière à délivrer une alarme via un email, via un SMS, via une sortie numérique et/ou via un relais.

5. Dispositif de sauvegarde (100) selon l'une des revendications 1 à 4, **caractérisé en ce que** l'unité de comparaison (102) est adaptée de manière à déterminer une manipulation sur le code de programme du contrôleur programmable (200) et/ou une contamination par des virus informatiques dans le code de programme du contrôleur programmable (200).

6. Dispositif de sauvegarde (100) selon l'une des revendications 1 à 5, **caractérisé en ce que** l'interface (104) comprend une interface Ethernet, une interface MPI, et/ou une interface Profibus.

7. Dispositif de sauvegarde (100) selon l'une des revendications 1 à 6, **caractérisé par** une minuterie (102) adaptée de manière à demander en instruction à l'unité de commande de sauvegarde (102) de lire, après l'écoulement d'un intervalle temporel prédéterminé, au moins une partie de la mémoire de programme (208) du contrôleur programmable (100) en tant qu'autres données de sauvegarde de programme (122, 122a) à partir du contrôleur programmable, de manière à demander en instruction à l'unité de comparaison (102) de comparer les premières données de sauvegarde de programme (120) avec les autres données de sauvegarde de programme (122, 122a), et de manière à demander en instruction à l'unité d'alarme de délivrer une alarme, si les premières données de sauvegarde de programme et les autres données de sauvegarde de programme diffèrent.
